(19) Europäisches Patentamt
European Patent Office
Office européen des brevets

(11) Publication number: **0 052 878**
**B1**

# (12) EUROPEAN PATENT SPECIFICATION

(45) Date of publication of patent specification: **21.08.85**

(51) Int. Cl.$^4$: **H 02 K 3/493**

(21) Application number: **81109838.3**

(22) Date of filing: **23.11.81**

## (54) Magnetic wedge.

(30) Priority: **25.11.80 JP 164667/80**

(43) Date of publication of application:
**02.06.82 Bulletin 82/22**

(45) Publication of the grant of the patent:
**21.08.85 Bulletin 85/34**

(84) Designated Contracting States:
**DE FR NL**

(56) References cited:
**GB-A- 227 953**
**GB-A- 624 541**
**GB-A- 712 802**
**GB-A-1 107 485**
**US-A-3 507 029**
**US-A-3 968 556**

(73) Proprietor: **TDK CORPORATION**
**13-1, Nihonbashi 1-chome**
**Chyuo-ku Tokyo (JP)**

(72) Inventor: **Watabe, Seiji**
**c/o TDK Electronics Co. Ltd. 13-1, Nihonbashi 1-chome Chuo-ku Tokyo (JP)**
Inventor: **Makino, Motohiko**
**c/o TDK Electronics Co. Ltd. 13-1, Nihonbashi 1-chome Chuo-ku Tokyo (JP)**
Inventor: **Sasaki, Yasuhiro**
**c/o TDK Electronics Co. Ltd. 13-1, Nihonbashi 1-chome Chuo-ku Tokyo (JP)**

(74) Representative: **Schwan, Gerhard, Dipl.-Ing.**
**Elfenstrasse 32**
**D-8000 München 83 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 052 878 B1**

Courier Press, Leamington Spa, England.

**Description**

This invention relates to a magnetic wedge made of a sintered body of a magnetic material for insertion into each of the winding-holding slots of an electrical machine, and to a jig for insertion of such wedges.

Magnetic wedges are in use as means for improving the efficiency of electric motors. Varied means for improving the motor efficiency have been studied and developed, and typical of them are known as the open-slot and semiopen-slot types. The motors incorporating those means consist essentially of a stator and a rotor, and at least one of the opposing surfaces of the two members, usually of the stator, is formed with axially extending slots (or grooves) at regular intervals along the inner or outer periphery of the cylindrical member, the slots having windings inserted and held in place, one for each. In the opening of each slot is firmly fitted a magnetic wedge to keep the winding securely and increase the motor efficiency. In this way the copper and iron losses are decreased and the overall efficiency is improved. However, because motors run at operating frequencies from about 50 Hertz up to several hundred Kilohertz, most wedges have to be made of iron or steel or, for added strength against break at the time of insertion, iron powder compacts reinforced with glass fiber.

Furthermore, magnetic wedges of the aforementioned type are known (GB—A—712 802) which are composed of magnetic and non-magnetic metals selected so as to make the wedge freely deformable when it is inserted. The wedge includes on either side thereof zones consisting predominantly of magnetic metal powder, e.g. iron powder, while the central zone consists predominantly of non-magnetic metal powder, e.g. copper. However, it is difficult to produce such plastically deformable sintered wedges. Besides, wedges composed of magnetic and non-magnetic metals have various losses such as eddy current losses.

GB—A—1 1107 485 discloses a plastic, well-workable sealing mixture for the production of a slot plug, which sealing mixture is placed into the winding-holding slots whilst being in the plastic state. The mixture comprises a curable synthetic resin composition, a powdered magnetic material, e.g. iron powder, and a small percentage of an electrically insulating stiffening agent, e.g. ferrite powder, which ensures that the sealing mixture remains in the plastic state at elevated temperatures and until the curable resin composition sets.

A composite slot wedge comprising magnetic and non-magnetic portions for producing in a slot-wound dynamo electric machine a balanced asymmetry of the magnetic centre lines of the slot teeth, is known from GB—A—227 953. The wedge has T-shaped cross-section, having an upper web adapted to be supported by the edges of opening of the semi-open slot and a leg adapted to be fitted in the opening.

The object basic to the present invention is to provide for a wedge which can be relatively easily manufactured and which provides for energy saving.

This object, in conformity with the invention, is reached in that the magnetic material of the sintered wedge body is a magnetically soft ferrite.

The invention makes possible a material improvement in the operating efficiency of motors by the adoption of sintered soft ferrite as wedge material. The use of magnetic wedges according to the invention will remarkably reduce the losses and increase the operating efficiency of the motor by 1 to 2%, directly leading to a saving of energy. This will be readily understood from the length of time for which the motor runs.

If a magnetically soft ferrite, a hard and brittle material per se, is formed into slender magnetic wedges, the products will easily be broken by subjection to lateral forces. Hence it has never been deemed possible that they can be inserted into the narrow slots of the stator or rotor and held in place by the forces of friction with the surrounding walls of the slots, and actually no attempts have ever been made to do so.

In spite of this, it was found that a most satisfactory magnetic wedge of the aforementioned type and being a length of number of T-shaped cross-section having an upper web adopted to be held by the edges of the opening of the slot and a leg adapted to be fitted in the opening can be safely inserted by using a jig which comprises a base plate having a top supporting surface adapted to support the leg of the wedge thereon and heads on either extremity of the supporting surface, the cross-section of T-head being larger than the cross-section of the T-shaped wedge.

Embodiments of the invention are described in detail below with reference to the drawings, in which:

Figure 1 is a fragmentary view of an electric motor incorporating the present invention; and

Figure 2 is a perspective view of an insertion jig for the magnetic wedge embodying the invention.

Among the magnetically soft ferrites which may advantageously be employed for the invention are the ferrites of Mn-Zn, Mn-Zn-Fe, Ni-Cu-Zn, and Ni-Fe types. As will be explained later, these magnetically soft ferrites will have little effect in the form of powder compacts; they should always be used as sintered bodies. The magnetically soft ferrite for use in the invention may be made in the conventional way.

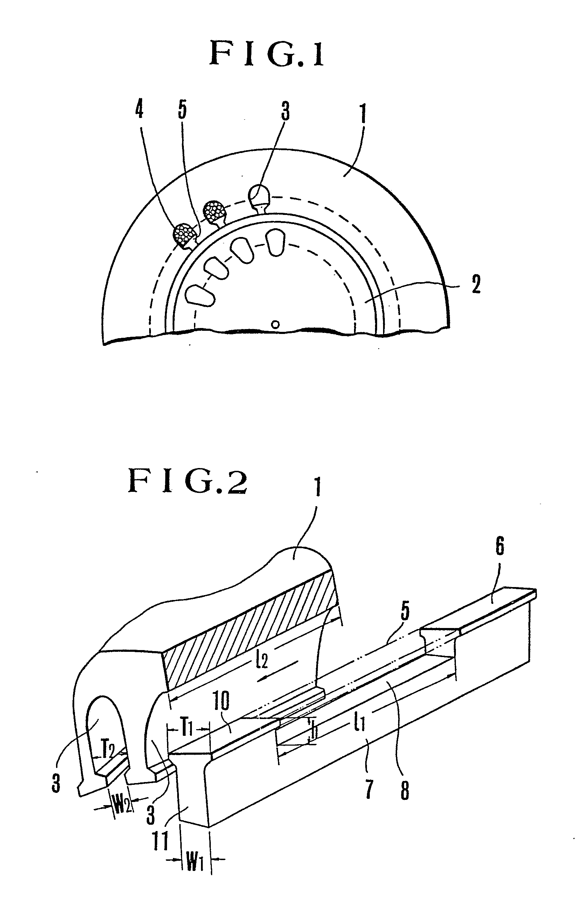

Referring to Figure 1, which illustrates how magnetic wedges are fitted in stator slots, the numeral 1 indicates a stator and 2 a rotor, the stator being the member wedged in this embodiment of the invention. The inner periphery of the stator 1 has a number of keyhole-shaped slots 3 formed in an equidistantly spaced relation. Each slot 3 receives part of a winding 4, and its open end facing the rotor is closed with a generally T-shaped magnetic wedge 5 of a size fit for the purpose. A long stick of magnetic ferrite is easily

broken by forces applied laterally across its axis. If directly inserted into the slot such as by hammering or machine pushing, slidingly in parallel to its long opening, the stick would be subjected to excessive forces from the surrounding wall and the winding and could crack from stresses and strains. To avoid this, the stick is inserted in place using a jig as shown in Figure 2.

The space available for the magnetic wedge is very small because of the winding fitted deep in the narrow slot. Therefore, a metal jig to be used has twin T-heads 6 and 10 either of which can force away the winding sidewise, or into a more compact form, to provide enough space for the wedge insertion. The T-heads 6, 10 are formed in one piece with a base 7 of a given width $W_1$ in between to constitute the jig. The top of the base in the middle part of the jig serves as a supporting surface 8, and the height h of the T-heads 6, 10 as measured from that surface is slightly greater than the height of the magnetic wedge 5. The width $W_1$ of the base 7 is slightly less than the width $W_2$ of opening of the slot 3, and the width $T_1$ of the top of each T-head is slightly less than the corresponding width $T_2$ of the slot 3. The length $l_1$ of the support surface 8 is so chosen as to exceed the length $l_2$ of the stator slot. For the wedging, the magnetic wedge 5 is placed on the support surface 8, and the jig carrying the wedge is inserted, with its front end 11 as the guide, into the slot 3. The front T-head 10 moves in the direction of the arrow, pushing the winding aside and creating a sufficient space for the accommodation of the wedge 5. The wedge is thus smoothly inserted into the slot without subjection to any stress. Since the length $l_1$ of the support surface on which the wedge rests is greater than the length $l_2$ of the slot, the jig is then pulled downward out of the stator slot, leaving the wedge behind in place within the slot.

Next, a few embodiments of the magnetic wedge of the invention will be described below.

Magnetic wedges were designed and made for use with an induction motor of the semiopen type with four poles and ratings of voltage V=200 V, current I=3.8 A, 1410 rpm, and 750 W at 50 Hz and having 360 slots formed in the stator. The wedges were made in three types of different compositions, namely

$$Mn_{0.7}Zn_{0.2}Fe_{0.1}Fe_2O_{4+\delta}$$
(Sintered ferrite body 1),

$$Ni_{0.34}Cu_{0.1}Zn_{0.56}Fe_2O_{4+\delta}$$
(sintered ferrite body 2),

and

$$Ni_{0.6}Fe_{0.4}Fe_2O_{4+\delta}$$
(Sintered ferrite body 3).

For comparison purposes, a plastic molding containing 85% by weight of pulverized sintered ferrite (ferrite powder compact) and a glass fiber-reinforced plastic molding containing 70% by weight of iron dust (iron dust compact) were also made. Wedges of each type were fitted in the slots of the induction motor as shown in Figure 1, and then the motor was tested for various characteristics. Also, the motor free from such magnetic wedges was tested in the same way. The items measured were the efficiency, power factor, slip, total loss, maximum output, and maximum torque of the motor during operation under rated conditions. The results were as tabulated below.

| Induction motor characteristic | Without wedge | With wedges of sintered ferrite bodies 1 | 2 | 3 | With ferrite powder compact | With iron dust compact |
|---|---|---|---|---|---|---|
| Efficiency (%) | 71.7 | 74.5 | 74.0 | 73.5 | 73.0 | 72.8 |
| Power factor (%) | 71.6 | 72.7 | 72.3 | 72.0 | 76.8 | 71.7 |
| Slip (%) | 5.8 | 5.6 | 5.7 | 5.76 | 5.78 | 5.8 |
| Total loss | 296 | 257 | 264 | 270 | 277 | 280 |
| Max. output* | 203 | 197 | 199 | 200 | 201 | 203 |
| Max. torque* | 306 | 271 | 280 | 293 | 300 | 306 |

* The maximum output and torque are percentages based on the output and torque, respectively, during operation under rated conditions.

As can be seen from the table, the wedges of sintered ferrite bodies 1, 2, 3 according to the invention reduced the total losses of the motors to levels lower than those with the green ferrite and iron compacts, to say nothing of the loss without the use of wedges. In addition, they permitted 1% to nearly 3% improvements in motor efficiency over the wedge-free motor and 0.5—1.7% over the motors using the ferrite powder compact wedge and iron dust compact wedge. It should be obvious to any one of ordinary skill in the art that these improvements

made possible by the invention are of very great value from the viewpoint of energy saving.

**Claims**

1. A magnetic wedge for insertion into each of the winding-holding slots (3) of an electrical machine, said wedge (5) being made of a sintered body of a magnetic material, characterized in that said magnetic material is a magnetically soft ferrite.

2. A magnetic wedge according to claim 1, in which said magnetically soft ferrite is selected from the group consisting of the ferrites of Mn-Zn, Mn-Zn-Fe, Ni-Cu-Zn, and Ni-Fe types.

3. A magnetic wedge according to claim 1 or 2, in which said winding-holding slots (3) are of semi-open type.

4. A magnetic wedge according to claim 3, in which said wedge (5) is a length of member of T-shaped cross-section having an upper web adapted to be held by the edges of opening of said semi-open slot (3) and a leg adapted to be fitted in said opening.

5. A jig for insertion of magnetic wedges (5) of sintered ferrite into winding-holding slots (3) of an electric machine, each of said wedges being a length of member of T-shaped cross-section having an upper web adapted to be held by the edges of the opening of said slot and a leg adapted to be fitted in said opening, characterized in that said jig comprises a base plate (7) having a top supporting surface (8) adapted to support the leg of said wedge (5) thereon and heads (10) and (6) on either extremity of said supporting surface, the cross-section of T-head (10) being larger than the cross-section of said T-shaped wedge (5).

6. A jig according to claim 5, in which said winding-holding slots (3) are of semi-open type.

**Patentansprüche**

1. Magnetischer Keil zum Einsetzen in jede der Wicklungsaufnahmenuten (3) einer elektrischen Maschine, wobei der Keil (5) aus einem gesinterten Körper aus einem magnetischen Werkstoff gefertigt ist, dadurch gekennzeichnet, daß der magnetische Werkstoff ein magnetisch weicher Ferrit ist.

2. Magnetischer Keil nach Anspruch 1, wobei der magnetisch weiche Ferrit aus der aus den Ferriten von Mn-Zn, Mn-Zn-Fe, Ni-Cu-Zn und Ni-Fe bestehenden Gruppe ausgewählt ist.

3. Magnetischer Keil nach Anspruch 1 oder 2, wobei die Wicklungsaufnahmenuten (3) halboffen sind.

4. Magnetischer Keil nach Anspruch 3, wobei der Keil (5) ein Stück eines Teiles von T-förmigem Querschnitt ist, das einen oberen Steg, der von den Kanten der Öffnung der halboffenen Nut (3) gehalten werden kann, und einen Schenkel aufweist, der in die Öffnung eingepaßt werden kann.

5. Montagevorrichtung zum Einsetzen von magnetischen Keilen (5) aus gesintertem Ferrit in Wicklungsaufnahmenuten (3) einer elektrischen Maschine, wobei jeder der Keile ein Stück eines Teiles von T-förmigem Querschnitt ist, das einen oberen Steg, der von der Kanten der Öffnung der Nut gehalten werden kann, und einen Schenkel aufweist, der in die Öffnung eingepaßt werden kann, dadurch gekennzeichnet, daß die Montagevorrichtung eine Grundplatte (7) mit einer oberen Stützfläche (8), auf welcher der Schenkel des Keils (5) abstützbar ist, und an beiden Enden der Stützfläche befindlichen Köpfen (10) und (6) aufweist, wobei der Querschnitt des T-Kopfes (10) größer als der Querschnitt des T-förmigen Keils (5) ist.

6. Montagevorrichtung nach Anspruch 5, wobei die Wicklungsaufnahmenuten (3) halboffen sind.

**Revendications**

1. Cale magnétique destinée à être introduite dans chacune des encoches de bobinage (3) d'une machine électrique, ladite cale (5) étant constituée par un corps de matière magnétique frittée, caractérisée en ce que ladite matière magnétique est une ferrite magnétiquement douce.

2. Cale magnétique selon la revendication 1, caractérisée en ce que ladite ferrite magnétiquement douce est choisie dans le groupe comprenant les ferrites du type Mn-Zn, Mn-Zn-Fe, Ni-Cu-Zn, et Ni-Fe.

3. Cale magnétique selon la revendication 1, ou 2, caractérisée en ce que lesdites encoches de bobinage (3) sont du type semi-ouvert.

4. Cale magnétique selon la revendication 3, caractérisée en ce que ladite cale (5) fait partie d'une pièce ayant une section en T qui possède une membrure supérieure adaptée à être tenue par les bords de l'ouverture de ladite encoche semi-ouverte (3) et une jambe adaptée à se loger dans ladite ouverture.

5. Gabarit pour introduire des cales magnétiques (5) en ferrite frittée dans les encoches de bobinage (3) d'une machine électrique, chacune desdites cales faisant partie d'une pièce ayant une section en T comportant une membrure supérieure adaptée à être tenue par les bords de l'ouverture de ladite encoche et une jambe adaptée à être logée dansladite ouverture, caractérisé en ce que ce gabarit comprend une plaque de base (7) ayant une surface (8) adaptée à supporter la jambe de ladite cale (5) et des têtes (10) et (6) aux deux extrémités de ladite surface de support, la section de la tête en T (10) étant plus grande que celle de ladite cale en T (5).

6. Gabarit selon la revendication 5, caractérisé en ce que lesdites encoches de bobinage (3) sont du type semi-ouvert.

FIG.1

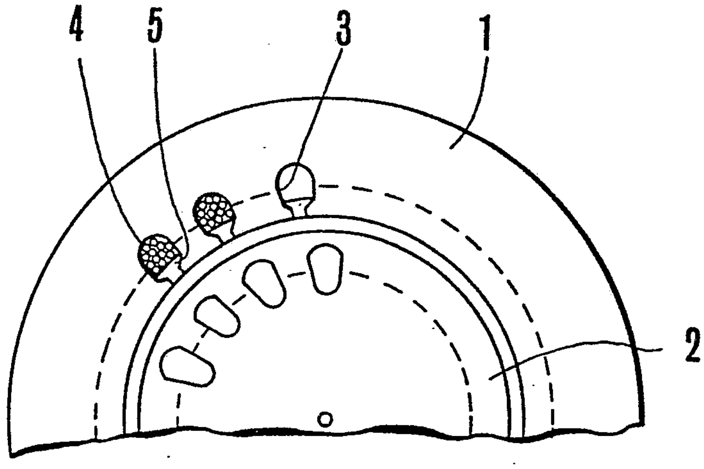


FIG.2